# EUROPÄISCHE PATENTSCHRIFT

(11) **EP 3 190 699 B1**
(45) Veröffentlichungstag und Bekanntmachung des Hinweises auf die Patenterteilung: **18.09.2019**
(21) Anmeldenummer: 17000031.9
(22) Anmeldetag: 09.01.2017
(51) Int. Cl.: H02S 40/44, H02S 20/23, H02S 40/42, F24S 25/61, F24S 25/632, F24S 25/35, F24S 25/70, F24S 25/60, F24S 20/00

(54) **HYBRIDSOLARMODUL-DACHMONTAGESYSTEM**
HYBRID SOLAR MODULE ROOF MOUNTING SYSTEM
SYSTÈME DE POSE DE PANNEAU SOLAIRE HYBRIDE SUR UN TOIT

(30) Priorität: 07.01.2016 DE 202016100046 U
(43) Veröffentlichungstag der Anmeldung: 12.07.2017
(73) Patentinhaber: Beyersdorffer, Mathias, 29160 Crozon (FR); Söhn, Stefan, 80634 München (DE); Tolksdorf, Kai, 30966 Hemmingen (DE); Grobe, Carsten, 31174 Schellerten (DE)
(72) Erfinder: Beyersdorffer, Mathias, 29160 Crozon (FR)
(74) Vertreter: Heyerhoff Geiger & Partner Patentanwälte PartGmbB

(56) Entgegenhaltungen:
- EP-A1- 2 937 646
- EP-A2- 1 724 843
- US-A1- 2014 263 902

## Beschreibung

Die Erfindung betrifft ein Hybridsolarmodul-Dachmontagesystem mit Höhenjustierelementen zur Befestigung auf einem Gebäudedach, Tragschienen zur Befestigung in Dachneigungsrichtung) des Gebäudedachs auf den Höhenjustierelementen, sodass sie auf den Höhenjustierelementen liegen, und Wärmetauscher mit einem Fluidkanal zur Befestigung in Firstrichtung auf den Tragschienen und mit einer planebenen Oberseite zur flächig anliegenden Anordnung von Solarmodulen darauf.

Photovoltaikmodule, im Folgenden vereinfacht PV-Module genannt, dienen der Umwandlung von Sonneneinstrahlung in elektrische Energie. Bei einem solchen Umwandlungsprozess heizen sich die PV-Module auf, wodurch ihr Wirkungsgrad absinkt. Zur Lösung dieses Problems ist es bekannt, PV-Module zu kühlen, indem Kühlmittelleitungen an ihrer Rückseite entlang geführt werden, die von Kühlmittel durchströmt werden. Zur Übertragung von möglichst viel Wärme in das Kühlmittel ist die Kühlmittelleitung möglichst eng am Wärme erzeugenden Halbleitermaterial des PV-Moduls angeordnet. Beispielsweise ist sie von unten an das Halbleitermaterial anlaminiert.
Aus der EP2937646A1 ist ein Hybridsolarmodul-Dachmontagesystem bekannt, bei dem Wärmetauscher verkippbar in Tragschienen gelagert sind, sodass sie sich in ihrer Ausrichtung an von oben auf sie aufgelegte PV-Module anpassen können. Hierdurch kann ein Luftspalt zwischen Wärmetauschern und PV-Modul gering gehalten werden.
Eine einfache Befestigung von PV-Modulen mittels Haltebolzen an einem Dachsystem ist aus der US2014/0263902A1 bekannt. Ein weiteres Befestigungssystem zur Befestigung von PV-Modulen an einem Dach ist aus der EP1724843A2 bekannt.

Es ist eine Aufgabe der vorliegenden Erfindung, ein Hybridsolarmodul-Dachmontagesystem anzugeben, mit dem gekühlte PV-Module einfach auf einem Gebäudedach montiert werden können.

Diese Aufgabe wird durch ein Hybridsolar-Dachmontagesystem der eingangs genannten Art gelöst, bei dem erfindungsgemäß die Tragschienen mehrere Montageausnehmungen aufweisen, durch die jeweils ein Höhenjustierelement hindurchgeführt ist, und über jeder Montageausnehmung ein Tragelement angeordnet ist, mit dem die Tragschiene auf dem Höhenjustierelement aufliegt und hierdurch vom Höhenjustierelement getragen ist.

Die Erfindung geht von der. Überlegung aus, dass eine stoffschlüssige Befestigung von Kühlmittelleitungen oder allgemein einem Wärmetauscher an PV-Modulen zu mechanischen Spannungen und damit zu einer starken mechanischen Beanspruchung der PV-Module führen kann, die durch thermische Ausdehnungsbewegungen bei starken Temperaturschwankungen verursacht sind. Solche Spannungen können zu Ermüdungserscheinungen und im schlimmsten Fall zu einem Defekt des betreffenden PV-Moduls führen.

Solche Spannungen lassen sich verringern, wenn das PV-Modul ohne stoffschlüssige Verbindung auf einem Wärmetauscher aufliegt, sodass sich beide Elemente bei starken Temperaturschwankungen relativ zueinander bewegen können. Eine solche Bewegungsfreiheit birgt jedoch den potentiellen Nachteil, dass sich zwischen dem PV-Modul und dem Wärmetauscher eine Luftschicht befindet, deren Dicke einen guten Wärmeübergang zwischen PV-Modul und Wärmetauscher stark verringert.

Dieser Nachteil kann verringert werden, wenn-die Wärmetauscher mit einer sehr ebenen Oberfläche auf dem Gebäudedach montiert werden, sodass die PV-Module flächig an den Wärmetauschern zu liegen kommen. Ein solcher exakt planebener Aufbau der Wärmetauscher auf beziehungsweise in einem Gebäudedach ist jedoch aufwändig.

Durch die Erfindung kann der Aufwand erheblich reduziert werden. Mithilfe der Höhenjustierelemente zwischen einer tragenden Struktur des Gebäudedachs und den Wärmetauschern kann vor der Befestigung der Tragschienen auf dem Gebäudedach ein sehr ebener Montageunterbau geschaffen werden, auf dem die Tragschienen und darauf die Wärmetauscher sehr exakt und einfach in einer Ebene ausgerichtet montierbar sind. Entsprechend eben ist auch die plane Oberseite der Wärmetauscher, auf die die Solarmodule beziehungsweise PV-Module aufgelegt werden können. Es kann ein guter Wärmeübertrag bei Aufrechterhaltung der Relativbewegung der Elemente zueinander erhalten bleiben.

Durch das erfindungsgemäße System kann eine Fläche von mehreren Photovoltaik-Modulen in einer besonders einfachen Weise zur solarthermischen Energiegewinnung genutzt werden. Aus einem Solarmodulsystem entsteht hierdurch ein Hybridsolarmodulsystem, unabhängig davon, ob die abgeführte Wärmeenergie später genutzt wird. Bedeutend ist auch die Kühlung der Solarmodule, deren Temperaturniveau durch die Wärmetauscher zweckmäßigerweise auf maximal 50°C eingestellt wird, damit die PV-Module effektiv gekühlt werden. Wenn gewünscht, kann die von den PV-Modulen abgegebene Wärme weiteren Betriebsprozessen zur Verfügung gestellt werden. So kann die Wärme zur Anhebung eines Heizungs-Rücklaufs verwendet werden. Ebenfalls möglich ist die Verwendung der Wärme in einer Niedertemperaturheizung, beispielsweise in einer Bodenheizung und/oder einer Wandheizung. Ebenfalls vorteilhaft ist die Vorheizung einer Sole-Wasser-Wärmepumpe.

Das Hybridsolarmodul-Dachmontagesystem dient zweckmäßigerweise der Befestigung von auf einem Schrägdach angeordneten und als Dacheindeckung dienenden Solarmodulen. Die Solarmodule können bei einem solchen sogenannten Indach-System PhotovoltaikModule, also PV-Module sein. Die Erfindung ist jedoch auch geeignet zur Verwendung mit reinen Solarthermie-Modulen, die zum Umwandeln von Sonneneinstrahlung in Wärme vorgesehen sind. Auf die Hybridnutzung wird dann verzichtet.

Die Tragschienen sind zweckmäßigerweise jeweils ein Metallprofil, beispielsweise ein Stranggussprofil, insbesondere aus Aluminium. Sie tragen die Solarmodule und die Wärmetauscher und sind ihrerseits über die Höhenjustierelemente an einer Gebäudedachkonstruktion befestigt, beispielsweise an einer Dachsparrenkonstruktion. Im montierten Zustand verlaufen die Tragschienen zweckmäßigerweise in Dachneigungsrichtung, also in einer Ablaufrichtung eines Schrägdachs vom First zur Traufe.

Das Gebäudedach ist zweckmäßigerweise ein Satteldach und kann ein Dach eines jedweden Gebäudes sein, auch einer Scheune, eines Stalls, einer Halle, eines Unterstands oder dergleichen. Das Gebäudedach umfasst zweckmäßigerweise eine Dachkonstruktion in Form einer Holzkonstruktion, wobei auch Konstruktionen aus Holz und anderen Materialien oder nur aus Metall möglich sind.

Die Höhenjustierelemente sind Elemente, die in die Dachkonstruktion eingebracht werden können bzw. darin eingebracht sind und auf denen die Tragschienen und damit auch die Solarmodule ruhen, die also deren Gewicht tragen. Die Höhenjustierelemente sind zweckmäßigerweise so bemessen, dass die Tragschienen zumindest überwiegend von der darunter liegenden Dachkonstruktion beabstandet sind, sie also zumindest überwiegend, insbesondere vollständig auf den Höhenjustierelementen ruhen. Die Höhenjustierelemente können in die Dachkonstruktion eingeschraubt sein, weisen also ein unteres Schraubgewinde auf und sind in einer einfachsten Variante Schrauben. Die Höhenjustierelemente haben vorteilhafterweise einen verbreiterten Kopf, auf dem das Gewicht der Tragschiene und des Solarmoduls ruht. Der Kopf kann ein Schraubenkopf sein, der zum Tragen des gesamten Dachmontagesystems und der Solarmodule ausgelegt ist. Das System mit den Modulen kann auf den Tragköpfen der Höhenjustierelemente aufliegen.

Die Wärmetauscher beinhalten einen Fluidkanal, also eine oder mehrere Leitungen zum Führen von Wasser mit oder ohne Zusätzen oder einer anderen Flüssigkeit. Der Fluidkanal ist zweckmäßigerweise eine Druckwasserführung, in der ein Überdruck aufgebaut werden kann, sodass beispielsweise Wasserdruck in den Wasserleitungen aufrechterhalten bleibt. Der Fluidkanal ist vorteilhafterweise in den Wärmetauschern integriert, also einstückig mit einem Wärmetauscher ausgeführt. Ein Wärmetauscher ist zweckmäßigerweise ein Metallprofil, beispielsweise ein Stranggussprofil, insbesondere aus Aluminium. Ein Wärmetauscher weist auf seiner Oberseite eine ebene Fläche auf, auf die ein Solarmodul, insbesondere ein PV-Modul, vollflächig aufgelegt werden kann, sodass ein vollflächiger Kontakt zwischen der Oberseite und dem Modul entsteht. In der Oberseite kann eine Öffnung zur Aufnahme einer Anschlussdose eines Moduls vorhanden sein.

Erfindungsweise weisen die Tragschienen mehrere längliche Montageausnehmungen mit jeweils einem Breitbereich und einem Schmalbereich auf. Die Höhenjustierelemente weisen zweckmäßigerweise einen Tragkopf auf, der durch den Breitbereich hindurch passt, nicht jedoch durch den Schmalbereich. Hierdurch kann der Tragkopf durch den Breitbereich hindurchgeführt werden und hinter dem Schmalbereich verriegeln, sodass ein Abheben der Tragschienen nach oben blockiert wird. Auf diese Weise ist eine einfache Montage der Tragschienen auf den Höhenjustierelementen möglich, indem eine Tragschiene von oben auf zwei oder mehr Höhenjustierelemente aufgesetzt wird, sodass die Tragköpfe der Höhenjustierelemente durch den Breitbereich hindurchgeführt werden. Anschließend kann die Tragschiene so zu den Höhenjustierelementen verschoben werden, dass diese durch den Schmalbereich ragen und der Tragkopf hinter dem Schmalbereich verriegelt.

Weiter weisen die Tragschienen mehrere Montageausnehmungen zum Hindurchführen von jeweils einem Höhenjustierelement auf und über jeder Montageausnehmung ein Tragelement, insbesondere ein Tragsteg, zur Auflage auf dem Höhenjustierelement und zum Tragen der Tragschiene. Das Tragelement kann eine durchgehende Struktur sein, insbesondere bei der Ausführung der Tragschiene als Stranggussprofil, sodass dann ein Tragelement über mehrere Montageausnehmungen ragt zum Tragen der Tragschiene. Eine Tragschiene kann auf die Höhenjustierelemente aufgesteckt und mit dem oder den Tragelementen auf die Höhenjustierelemente aufgelegt werden.

Nach der Montage der Tragschienen auf den Höhenjustierelementen kann es sein, dass die Höhenjustierelemente nachjustiert werden sollten, um Unebenheiten in der Auflagefläche zur Auflage für die Solarmodule auszugleichen. Ein solches Nachjustieren kann erleichtert werden, wenn das Tragelement über der Montageausnehmung eine Justieröffnung zum Hindurchführen eines Werkzeugs aufweist, die kleiner als ein Tragkopf des Höhenjustierelements ist. Das Werkzeug kann durch das Tragelement hindurchgeführt werden, das durch die geringe Ausdehnung der Justieröffnung seine tragende Funktion auf dem Höhenjustierelement nicht verliert.

Weiter ist es vorteilhaft, wenn die Tragschienen oberhalb einer Montageausnehmung und insbesondere oberhalb einer Justieröffnung jeweils ein oder mehrere Einschubfächer zum Einschieben eines Flacheisens in Längsrichtung des Tragelements und insbesondere zum kraftschlüssigen Halten des Flacheisens aufweist. Das Flacheisen kann ein Metallprofil sein, beispielsweise aus Eisen oder Aluminium, und kann beispielsweise ein Flacheisen zum Halten einer Regenrinne sein. Ebenfalls möglich ist ein Kunststoffprofil. Besonders vorteilhaft sind zwei übereinanderliegende Einschubfächer für je ein Flacheisen, sodass, insbesondere in das obere Einschubfach, ein Stützelement für einen untersten Wärmetauscher eingeführt und dort gehalten werden kann.

Das Hybridsolarmodul-Dachmontagesystem kann auf einem Gebäudedach angeordnet sein, wobei die Höhenjustierelemente unmittelbar oder mittelbar an einer tragenden Dachkonstruktion, insbesondere an einer Holzkonstruktion des Gebäudedachs befestigt sind, beispielsweise in die Holzkonstruktion eingeschraubt sind. Die Dachkonstruktion kann hierbei als Teil des Dachmontagesystems angesehen werden.

Vorteilhafterweise umfassen die Höhenjustierelemente jeweils einen oberen Tragkopf, wobei mehrere in Firstrichtung verlaufende Reihen von Tragköpfen gemeinsam eine Ebene aufspannen, in der mehrere Tragschienen befestigt werden. Zweckmäßigerweise spannen Gruppen von jeweils mehreren in Firstrichtung verlaufenden Reihen von Tragköpfen mehrere Ebenen auf, die in Dachneigungsrichtung überschuppend angeordnet sind. Auf diese Weise kann ein überschuppender Verband von Wärmetauschern und darauf ein überschuppender Verband von Solarmodulen montiert werden.

Bei einer Befestigung der Höhenjustierelemente in einer Dachkonstruktion ist es vorteilhaft, wenn die betreffende Verbindungsstelle trocken gehalten wird. Dies kann in einfacher Weise erreicht werden, wenn die Höhenjustierelemente zwischen der Dachkonstruktion und der Tragschiene jeweils von einem Abdichtelement umgeben sind, das das Höhenjustierelement nach außen hin abdichtet. Ein solches Abdichtelement kann ein Gummizylinder sein, der zweckmäßigerweise zwischen einer Unterdeckbahn der Dachkonstruktion und Tragschiene eingeklemmt ist und insbesondere durch das Einklemmen abdichtet.

Die Wärmetauscher sind zweckmäßigerweise an den Tragschienen befestigt, insbesondere oben an den Tragschienen befestigt. Hierfür ist es vorteilhaft, wenn die Tragschienen jeweils mehrere nach oben offene Halteausnehmungen aufweisen, in die die Wärmetauscher mit einem Tragfuß von oben eingefügt sind. Ein Tragfuß eines Wärmetauschers ragt somit zumindest teilweise in die Halteausnehmung ein, sodass Wärmetauscher und Tragschiene einen Formschluss bilden.

Um ein unerwünschtes Lösen eines Wärmetauschers von einer Tragschiene entgegenzuwirken sind die Halteausnehmungen - zumindest in einer Anlagefläche für einen Tragfuß eines Wärmetauschers - relativ zur Dachsenkrechten in Richtung zur Geosenkrechten - und insbesondere über die Geosenkrechte hinaus verkippt. Der Tragfuß wird hierdurch vom Gewicht des Wärmetauschers in die Halteausnehmung gedrückt und ein Abheben nach oben wird verhindert.

Weiter ist es vorteilhaft, wenn die Wärmetauscher jeweils zumindest einen Tragfuß zum Einstecken in eine Halteausnehmung der Tragschiene von oben aufweisen, der eine Auflagefläche zum Auflegen auf die Tragschiene und eine Haltekralle zum Eingreifen in die Halteausnehmung aufweist. Hierdurch kann in sehr einfacher Weise ein ausreichend fester Formschluss erreicht werden, der dennoch eine Beweglichkeit beim Auftreten von mechanischen Spannungen wegen Temperaturänderungen aufrechterhält.

Bei starken Temperaturschwankungen kann es zu unterschiedlichen Ausdehnungsverhalten von Elementen des Dachmontagesystems kommen. Um Spannungen in den Wärmetauschern zu vermeiden, die zu Abweichungen ihrer planebenen Oberfläche führen können, ist es vorteilhaft, wenn die Wärmetauscher beweglich an den Tragschienen befestigt sind. Insbesondere vorteilhaft ist eine Verschiebbarkeit der Wärmetauscher in Firstrichtung relativ zu den Tragschienen in fertig montiertem Zustand.

Mit gleichem Vorteil sind die Wärmetauscher zweckmäßigerweise so an den Tragschienen befestigt, dass sie einzeln um ihre Längsachse verkippbar sind. Auch auf diese Weise kann thermischen Spannungen entgegengewirkt werden. Die Wärmetauscher umfassen hierfür zweckmäßigerweise einen Tragfuß in Form eines Schienenelements, mit dem sie in mehreren Tragschienen stehen, wobei ein einzelner fertig an den Tragschienen befestigter Wärmetauscher umfallen würde, also im Tragfuß nicht genügend Halt für einen freien Stand hat.

Zur Stützung von beweglichen Wärmetauschern ist es vorteilhaft, wenn zwei benachbarte Wärmetauscher in der Weise formschlüssig miteinander verbunden sind, dass sie trotz einer verkippbaren Befestigung in den Tragschienen einen selbst stabilisierenden Verbund bilden. Ein einzelner Wärmetauscher würde zwar gegebenenfalls aus seiner Betriebsposition verkippen, der Verbund verhindert jedoch ein solches Verkippen, sodass die planebene Oberfläche aufrechterhalten wird.

Eine weitere Möglichkeit zum Entgegenwirken von mechanischen Spannungen hervorgerufen durch Temperaturänderungen besteht darin, dass die Wärmetauscher zueinander in Längsrichtung beweglich sind, und zwar auch in fertig montiertem Zustand des Dachmontagesystems - gegebenenfalls ohne montierte Solarmodule. Die Wärmetauscher können zwar ineinander formschlüssig eingreifen, der Formschluss erlaubt jedoch eine Verschiebbarkeit in Längsrichtung, zweckmäßigerweise über eine Länge von zumindest 3 cm, insbesondere über die gesamte Länge der Wärmetauscher.

Mit gleichem Vorteil besteht in der Verbindung zwischen benachbarten Wärmetauschern ein Verkippspiel von zumindest 0,5 mm, insbesondere von zumindest 1 mm, sodass durch das Verkippspiel eine Verkippbarkeit der Wärmetauscher in den Tragschienen im Rahmen des Spiels erhalten bleibt. Die Wärmetauscher können auf diese Weise auch bei thermischen Schwankungen eine planebene gemeinsame Oberfläche bilden und bleiben zueinander leicht beweglich.

Die Erfindung ist außerdem gereichtet auf ein Verfahren zum Montieren eines Hybridsolarmodulsystems. Es wird vorgeschlagen, dass auf einer Dachoberfläche erfindungsgemäß Höhenjustierelemente gesetzt werden, diese in der Höhe so zueinander justiert werden, dass sie in einer gewünschten, insbesondere ebenen Fläche liegen, Tragschienen an den Höhenjustierelementen befestigt werden und darauf Wärmetauscher mit einem insbesondere integrierten Fluidkanal montiert werden. Auf die Oberseite der Wärmetauscher können nun Solarmodule flächig aufgelegt werden.

Die oben beschriebenen Eigenschaften, Merkmale und Vorteile dieser Erfindung, wie in den Ansprüchen definiert, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale.

Es zeigen:
- FIG 1: einen Ausschnitt eines Gebäudedachs mit darauf befestigten Höhenjustierelementen,
- FIG 2: den Ausschnitt des Gebäudedachs aus FIG 1 mit auf den Höhenjustierelementen aufgesetzten Tragschienen,
- FIG 3: eine der Tragschienen auf einem der Höhenjustierelemente in einem Querschnitt,
- FIG 4: den Ausschnitt des Gebäudedachs mit auf den Tragschienen aufgesetzten Wärmetauschern,
- FIG 5: einen Längsschnitt durch ein Hybridsolarmodul-Dachmontagesystem mit Wärmetauschern auf Tragschienen und Höhenjustierelementen,
- FIG 6: einen vergrößerten Ausschnitt aus FIG 5 und
- FIG 7: eine Draufsicht auf montierte Wärmetauscher mit einer Rohrverbindereinheit zum Verbinden von Fluidkanälen in den Wärmetauschern.

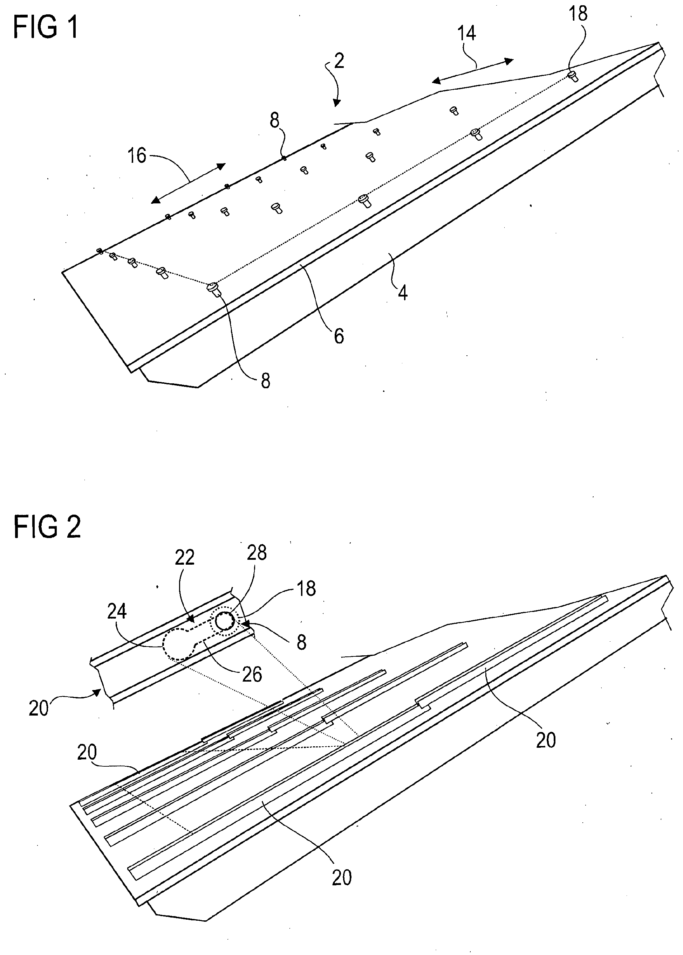

FIG 1 zeigt einen Ausschnitt eines Gebäudedachs 2 mit Dachsparren 4, auf die Unterdeckplatten 6 montiert sind, sodass sie eine geschlossene Innendachfläche bilden. Auf diese Innendachfläche wird ein Hybridsolarmodul-Dachmontagesystem mit einer ebenen Oberfläche montiert, auf die Solarmodule aufgelegt werden können. Das Hybridsolarmodul-Dachmontagesystem zeichnet sich dadurch aus, dass es PV-Module als Solarmodule tragen kann und darunterliegende Wärmetauscher zum Abführen von bei der Stromerzeugung durch die PV-Module auftretende Wärme aufweist, die hierfür eine Wasserführung zum Abführen der Wärme umfassen. Das Dachmontagesystem ist montagefreundlich und kommt ohne eine dauerhafte Klebeverbindung der Solarmodule mit den Wärmetauschern aus. Dennoch kann natürlich ein geeignetes Wärmeleitmedium zwischen den Wärmetauschern und den Solarmodulen sinnvoll sein, insbesondere wenn es nicht fest verklebend ist.

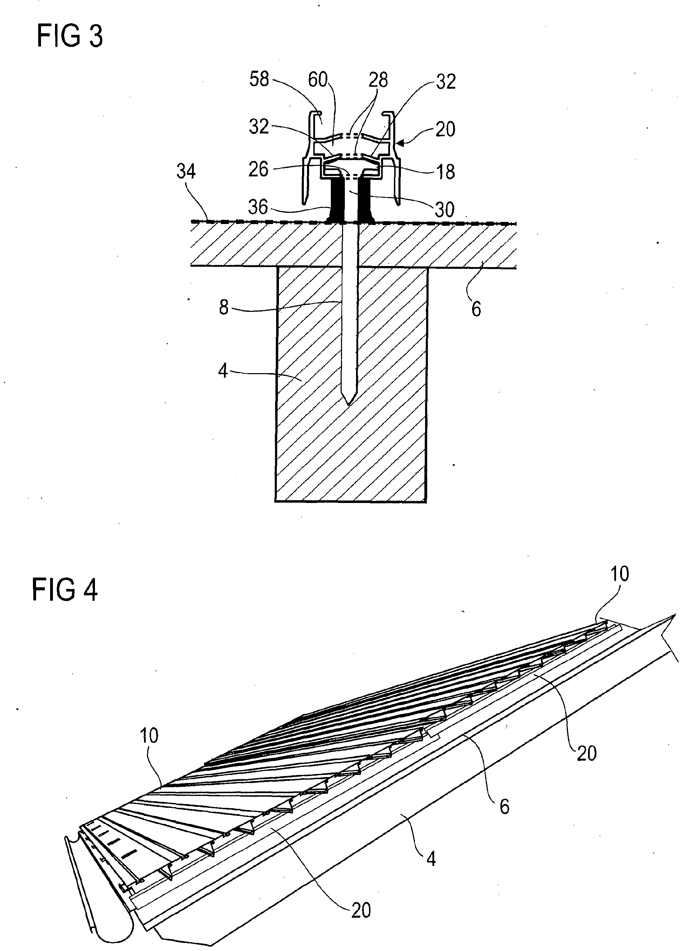

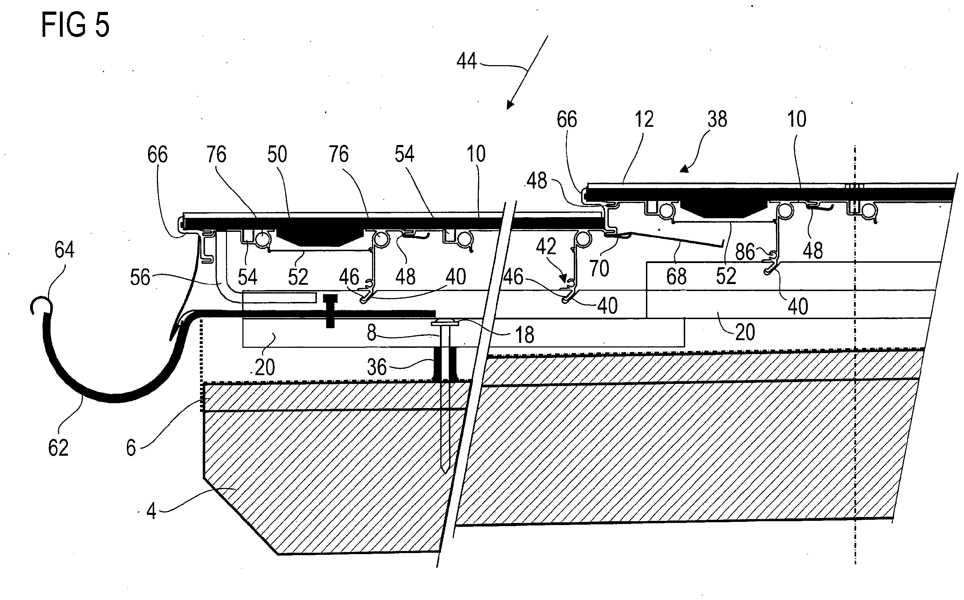

Um eine gute Verbindung zwischen den in FIG 4 sichtbaren Wärmetauschern 10 und den daraufliegenden und in FIG 5 sichtbaren Solarmodulen 12 zu erreichen, bildet erfindungsgemäß die Oberseite der Wärmetauscher 10 eine planebene Fläche, sodass ein Luftspalt zwischen Wärmetauschern 10 und Solarmodulen 12 möglichst gering ist. Zum Erreichen einer solchen planebenen Fläche umfasst das Hybridsolarmodul-Dachmontagesystem Höhenjustierelemente 8, die in Form von Schrauben ausgeführt sein können. Diese sind in das Gebäudedach 2 eingeschraubt, zweckmäßigerweise durch die Unterdeckplatten 6 in die Dachsparren 4, wie in FIG 1 dargestellt ist.

Der Abstand in Firstrichtung 14 der Höhenjustierelemente 8 zueinander kann hierbei der Breite der später aufzulegenden Solarmodule 12 entsprechen. Der Abstand der Höhenjustierelemente 8 zueinander in Dachneigungsrichtung 16 beziehungsweise Ablaufrichtung des Gebäudedachs 2 kann die Hälfte der Länge eines aufzulegenden Solarmoduls 12 sein, wobei der Abstand auch unterschiedlich sein kann, und der Abstand von einem Höhenjustierelement 8 zu seinem übernächsten Nachbarn der Länge des Solarmoduls 12 - abzüglich Überschuppungslänge - sein kann.

Zum Erreichen der planebenen Oberfläche werden die Höhenjustierelemente 8 nun auf ihre Position zueinander vermessen. Beispielsweise werden die Tragköpfe 18 der Höhenjustierelemente 8 auf ihre Anordnung derart durch Vermessung geprüft, ob die Tragköpfe 18 von zwei in Firstrichtung 14 verlaufenden Höhenjustierelementreihen eine Ebene bilden. Dies kann durch einen Laserstrahl oder eine Schnur, wie in FIG 1 und FIG 2 durch gestrichelte Linien angedeutet ist, geschehen. Die nächstliegend weiter oben liegenden beiden Reihen von Höhenjustierelementen 8 bilden wiederum mit ihren Tragköpfen 18 eine Ebene, wobei die beiden Ebenen in der Höhe jedoch leicht versetzt zueinander liegen, sodass eine Überschuppung der beiden Ebenen entsteht, entsprechend der späteren Überschuppung der Solarmodule 12.

Anschließend werden Tragschienen 20, wie in FIG 2 dargestellt, an den Höhenjustierelementen 8 befestigt. Auf jeweils zwei in Ablaufrichtung 16 benachbarte Höhenjustierelemente 8 wird eine Tragschiene 20 von oben aufgelegt und durch Verschieben in Ablaufrichtung 16 zur Traufe an den Höhenjustierelementen 8 befestigt.

Hierfür umfassen die Tragschienen 20 jeweils zwei Montageausnehmungen 22 mit jeweils einem Breitbereich 24 und einem Schmalbereich 26, wie in der abschnittsweisen Draufsicht auf eine Tragschiene 20 in FIG 2 dargestellt ist. Der Breitbereich 24 ist hierbei so groß, dass der Tragkopf 18 des Höhenjustierelements 8 von unten durch ihn hindurchgeführt werden kann. Der Schmalbereich 26 ist in seiner Breite senkrecht zur Längsrichtung der Tragschiene 20 und in Dachrichtung so gewählt, dass der Tragkopf 18 nicht hindurchpasst, jedoch ein unter dem Tragkopf 18 liegenden Hals des Höhenjustierelements 8 hindurch geführt werden kann. Wird die Tragschiene 20 so zum Höhenjustierelement 8 bewegt, dass dessen Tragkopf 18 durch den Breitbereich 24 geführt wird, und wird die Tragschiene 20 dann in Ablaufrichtung 16 nach unten verschoben, so wird der Tragkopf 18 über den Schmalbereich 26 und an dessen Ende geführt, wie in der Draufsicht aus FIG 2 dargestellt ist. Die Montageausnehmung 22 ist langgestrichelt und der Tragkopf 18 dort kurzgestrichelt dargestellt. Die Tragschiene 20 wird nun vom Tragkopf 18 formschlüssig gegen ein Anheben vom Gebäudedach 2 senkrecht zur Dachfläche gehalten.

Über dem Tragkopf 18 ist in der Draufsicht aus FIG 2 eine Justieröffnung 28 zu sehen, durch die der Tragkopf 18 von oben zugänglich ist. Durch diese Justieröffnung 28 kann ein Werkzeug, beispielsweise ein Inbusschlüssel oder ein Schraubendreher, geführt werden, und der Tragkopf 18 beziehungsweise das Höhenjustierelement 8 kann mit dem Werkzeug gedreht und somit in seiner Höhe über den Unterdeckplatten 6 beziehungsweise dem Gebäudedach 2 verstellt werden. Hierdurch ist eine Nachjustierung möglich, sodass auch die Oberseiten der in Firstrichtung 14 zueinander benachbarten Tragschienen 20 in einer Ebene liegen. In FIG 2 ist zu sehen, wie die Oberseiten der Tragschienen 20 einander überschuppende Ebenen bilden, wobei in FIG 2 der Anschauung halber nur zwei dieser Ebenen zu erkennen sind.

FIG 3 zeigt eine Tragschiene 20 in einem Querschnitt. Zu sehen sind ein Dachsparren 4 in einem Querschnitt, die daraufliegende Unterdeckplatte 6 und ein eingeschraubtes Höhenjustierelement 8 mit seinem Tragkopf 18. Der Hals 30 des Höhenjustierelements 8 ragt durch den Schmalbereich 26 der Montageausnehmung 22, und der Tragkopf 18 stößt nach oben gegen ein Tragelement 32 der Tragschiene 20, mit der diese auf den Tragkopf 18 beziehungsweise dem Höhenjustierelement 8 aufliegt. Ebenfalls sichtbar sind zwei Justieröffnungen 28, durch die ein Werkzeug von oben in den Tragkopf 18 eingesenkt werden kann.

Das Höhenjustierelement 8 ist durch eine Unterdeckbahn 34 in die Unterdeckplatte 6 beziehungsweise den Dachsparren 4 eingeschraubt. Um eine gute Dichtigkeit der Unterdeckbahn 34 aufrechtzuerhalten, ist ein Abdichtelement 36 zwischen Holzkonstruktion und Tragschiene 20 um das Höhenjustierelement 8 gelegt. Das Abdichtelement 36 ist ein Gummi-Hohlzylinder, der zwischen Tragschiene 20 und Holzkonstruktion, in diesem Fall der Unterdeckplatte 6 bzw. der Unterdeckbahn 34, eingeklemmt ist und hierdurch das Loch in der Unterdeckbahn 34 ringsherum abdichtet.

FIG 4 zeigt, wie in jede Tragschiene 20 eine Reihe von Wärmetauschern 10 eingehängt sind, in diesem Ausführungsbeispiel acht Wärmetauscher 10. Sie bilden nach oben hin eine planebene Oberfläche, auf die später die Solarmodule 12 aufgelegt werden. Jeweils mehrere Wärmetauscher 10 bilden eine planebene Oberfläche, wobei mehrere solcher planebenen Oberflächen einander überschuppend angeordnet sind, wie anhand von FIG 4 bei zwei solcher Oberflächen zu erkennen ist.

Diese überschuppenden Oberflächen bilden von sich aus bereits eine wetterfeste Außenbedachung, die als Außendach bereits vollständig geschlossen ist und das Dach vollständig schützt. Die später auf den Oberflächen montierten Solarmodule 12 sind für die Wetterfestigkeit daher nicht notwendig.

Außerdem bilden die überschuppenden Oberflächen in diesem Ausführungsbeispiel eine sogenannte harte Bedachung, die also neben der Wetterfestigkeit auch eine Feuerfestigkeit gegen Strahlung und Flugfeuer von außen bieten. Hierfür beträgt die Blechdicke der Wärmetauscher 10 oberflächenseitig zumindest 1 mm, insbesondere zumindest 1,5 mm. Die Ausführung des Wärmetauscherverbunds als harte Bedachung hat den Vorteil, dass die Solarmodule 12 die Anforderung als harte Bedachung nicht zwingend leisten müssen, so dass die bauaufsichtliche Zulassung der Solarmodule 12 vereinfacht wird.

Ein Längsschnitt durch das Hybridsolarmodul-Dachmontagesystem 38 und damit auch durch die Wärmetauscher 10 und Tragschienen 20 ist in FIG 5 dargestellt. Zu sehen ist der Dachsparren 4 mit der Unterdeckplatte 6 darauf und einem eingeschraubten Höhenjustierelement 8 mit seinem Abdichtelement 36. Auf dem Tragkopf 18 liegt eine Tragschiene 20, die der Übersichtlichkeit halber in FIG 5 nur schematisch dargestellt ist. Es sind zwei Tragschienen 20 zu sehen, die einander überschuppend angeordnet sind.

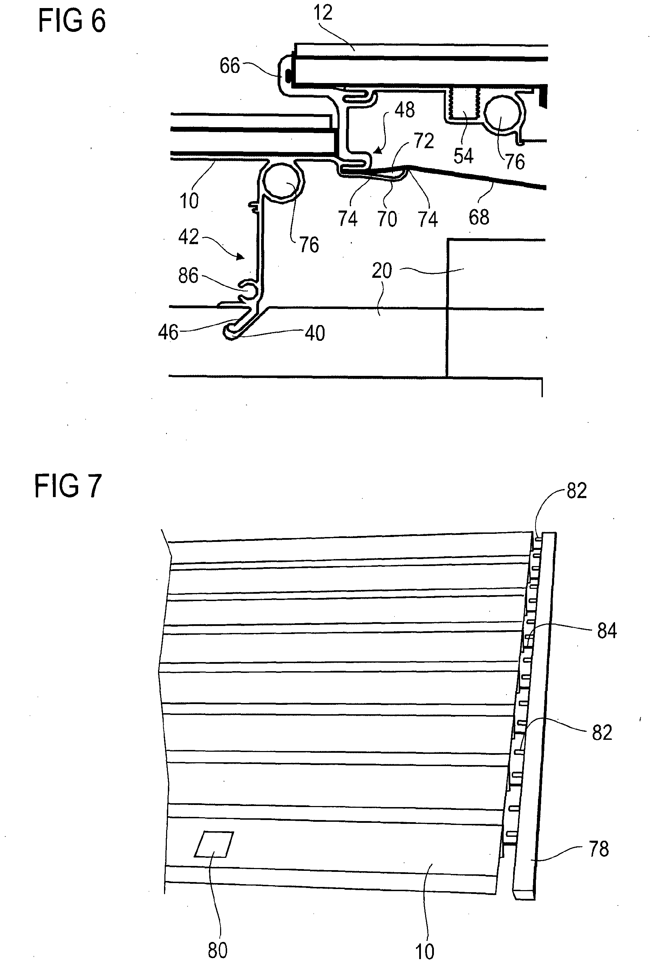

Die Tragschienen 20 weisen jeweils mehrere nach oben hin offene Halteausnehmungen 40 auf, in die die Wärmetauscher 10 mit einem Tragfuß 42 von oben eingefügt sind. FIG 6 zeigt diese Verbindung detaillierter. Die Wärmetauscher 10 sind - ebenso wie die Tragschienen 20 - als Aluminiumstranggussprofile hergestellt, sodass sie - abgesehen von Bohrungen und anderen Öffnungen und Ausnehmungen an einem oder beiden Enden - über ihre gesamte Länge gleichförmig ausgestaltet sind. Der Tragfuß 42 greift mit einer Haltekralle 46 in die Halteausnehmung 40 ein. Jede Halteausnehmung 40 weist an ihrer in FIG 5 links dargestellten Seite eine Anlagefläche für den Tragfuß 42 auf, der relativ zur Dachsenkrechten in Richtung zur Geosenkrechten 44 verkippt ist. Bei dem Ausführungsbeispiel aus FIG 5 ist die Anlagefläche sogar über die Geosenkrechte 44 hinaus verkippt und weist einen Winkel von 40° zur Dachsenkrechten beziehungsweise 50° zur Längsrichtung der Tragschiene 20 auf. Durch die Verkippung wird der Wärmetauscher 10 - wenn er durch seine Schwerkraft in Richtung zur Traufe drückt - nach unten auf das Dach beziehungsweise die Tragschiene 20 gezogen, sodass er spielfrei an der Tragschiene 20 anklemmt. Eine obere Auflageschiene des Tragfußes 42 liegt oben auf der Tragschiene 20 auf und begrenzt somit ein Einziehen der Haltekralle 46 in die Halteausnehmung 40.

Einander benachbarte Wärmetauscher 10 sind über einen Eingriff 48 der Länge nach miteinander verbunden. Der Eingriff 48 ist in FIG 6 detaillierter gezeigt und ist wie eine tiefe Nut-Feder-Verbindung ausgeführt, wobei jeder Wärmetauscher 10 eine Nut und eine Feder aufweist, und jede Feder in die Nut des anderen Wärmetauschers 10 eingreift. Auf diese Weise stützt sich der Verband von Wärmetauschern 10 gegeneinander ab.

Wie aus FIG 5 zu sehen ist, weist jeder Wärmetauscher 10 nur einen Tragfuß 42 auf, der sich über die gesamte Länge des Wärmetauschers 10 erstreckt. Ein einzelner Wärmetauscher 10 ist somit um eine im Tragfuß 42 liegende Längsachse, die also parallel zur Länge des Wärmetauschers 10 verläuft, verkippbar. Durch die Einhängung der Wärmetauscher 10 ineinander am Eingriff 48 wird diese Verkippbarkeit auf ein Maß eines vertikalen Spiels von 1 mm im Eingriff 48 beschränkt. Sie bleibt jedoch durch das Verkippspiel ein Stück weit erhalten, sodass die Wärmetauscher 10 leicht zueinander verkippbar bleiben.

Außerdem sind die Wärmetauscher 10 durch ihre Einhängung in den Tragschienen 20 der Länge nach in den Tragschienen 20 verschiebbar gelagert. Des Weiteren sind die Wärmetauscher 10 durch ihre Einhängung ineinander an den beidseitigen Eingriffen 48 über ihre gesamte Länge zueinander verschiebbar gelagert. Durch diese Verschiebbarkeiten und insbesondere auch durch die Verkippbarkeit der Wärmetauscher 10 zueinander können mechanische Spannungen in den Wärmetauschern 10 durch thermisch unterschiedliche Ausdehnungen beziehungsweise regional verschiedene Erwärmungen gering gehalten werden. Die Oberfläche der Wärmetauscher 10 bleibt hierdurch sehr gleichmäßig planeben und ein Spalt zwischen Wärmetauschern 10 und den Solarmodulen 12 bleibt gering, sodass ein guter Wärmeübergang zwischen Solarmodulen 12 und Wärmetauscher 10 gewährleistet ist.

Die Solarmodule 12 sind von oben auf die Wärmetauscher 10 aufgelegt und ragen mit einer Anschlussdose 50 durch eine obere Öffnung 76 eines der Wärmetauscher 10, die in FIG 6 dargestellt ist. Nach unten hin ist die Anschlussdose 50 durch eine untere Abdeckung 52, beispielsweise ein Abdeckblech, verschlossen, das in zwei Ausnehmeschienen des entsprechenden Wärmetauschers 10 eingeschoben werden kann. Jedes Solarmodul 12 ist in Gewindekanälen 54 eines Wärmetauschers 10 verschraubt. Jeder Wärmetauscher 10 weist hierfür eine Anzahl von Gewindekanälen 54 mit einem Gewinde zum Aufnehmen einer Halteschraube auf.

Dem untersten Wärmetauscher 10 fehlt nach unten hin ein benachbarter Wärmetauscher 10 zum Abstützen gegen ein Verkippen und für eine stabile Lagerung. Zum Ausgleich ist eine Stütze 56 der Länge nach in ein oberes Einschubfach 58 (FIG 3) der untersten Tragschiene 20 eingesteckt, auf der der unterste Wärmetauscher 10 aufliegt. Jede der untersten Tragschienen 20 kann mit einer solchen Stütze 56 versehen sein.

In ein darunterliegendes Einschubfach 60 ist ein Halteelement 62 zum Halten einer Regenrinne 64 von unten in Längsrichtung der Tragschiene 20 eingesteckt. Die Einschubfächer 58, 60 können hierbei so bemessen sein, dass die Stütze 56 und/oder das Halteelement 62 kraftschlüssig im Einschubfach 58 bzw. 60 festhält. Etwas fester ist eine Verschraubung oder eine formschlüssige Verbindung, z.B. durch einen Haltebolzen. In FIG 5 ist ein solcher Haltebolzen oder eine Schraube durch das Halteelement62 dargestellt. Eine Schraube kann hierbei in die Tragschiene 20 eingeschraubt und ein Haltebolzen in die Tragschiene 20 eingesteckt sein, wobei ein entsprechendes Loch in die Tragschiene 20 eingebohrt werden kann, beispielsweise in gleicher Weise, wie die Justieröffnung 28.

Nach unten hin wird jedes Solarmodul 12 durch mehrere Haltebügel 66 gehalten, die in einen unteren Eingriff 48 des untersten Wärmetauschers 10 seitlich eingeschoben sind. Jeder Haltebügel 66 hintergreift hierbei seinen Eingriff 48 formschlüssig, sodass ein Abziehen nach unten durch den Hintergriff blockiert ist.

Der Haltebügel 66 am unteren Ende der zweiten, dritten und jeder weiteren nach oben angeordneten Reihe von Solarmodulen 12 ist unten in den oberen Eingriff 48 des benachbarten Wärmetauschers 10 eingesteckt. Durch den Haltebügel 66 sind somit einander in der Überschuppung benachbarter Wärmetauscher 10 miteinander verbunden.

In den oberseitigen Eingriff der nach oben zur Überschuppung hin letzten Tragschiene 20 ist ein Verlängerungsblech 68 als Dichtungsblech eingeführt, die sich über die gesamte Länge des Wärmetauschers 10 erstrecken kann. Das Verlängerungsblech 68 weist über seine gesamte Länge eine Ausdehnung in Richtung zum First und zumindest 7 cm, insbesondere zumindest 12 cm auf. Dadurch, dass die Haltebügel 66 nur einige Zentimeter breit sind, ist ein Zwischenraum zwischen einander überschuppenden Solarmodulen 12 luftdurchlässig, sodass Schlagregen von unten eingeblasen werden kann. Durch das Verlängerungsblech 68 wird das Einblasen von Schlagregen nach unten auf die Dachkonstruktion beziehungsweise die Unterdeckbahn 34 vermieden.

Das Wasser sammelt sich auf dem Verlängerungsblech 68 und fließt nach unten in eine Auffangrinne 70, die im gezeigten Ausführungsbeispiel ein Teil des Eingriffs 48 ist, und zwar Teil des firstseitigen Teils des Eingriffs 48 des vom Eingriff 48 gesehen traufseitigen Wärmetauschers 10. Die Auffangrinne 70 ist so geformt, dass sie eine Ausformung weg vom darüber liegenden Verlängerungsblech 68 aufweist. Die Ausformung nach unten bewirkt einen Abstand 72 zwischen zwei Auflagelinien 74, an denen das Verlängerungsblech 68 die Auffangrinne 70 berührt. Durch diesen Abstand 72 wird die Kapillarwirkung zwischen den beiden Auflagelinien 74 gebrochen, so dass Wasser von der traufseitigen Auflagelinie 74 nicht zur firstseitigen Auflagelinie 74 gelangen kann. Der Abstand 72 beträgt zumindest 2 mm, insbesondere zumindest 4 mm.

Die Auffangrinne 70 ist so angeordnet, dass bei einer Dachneigung von ≥ 10° das Wasser von dem Verlängerungsblech 68 durch den Eingriff 48 nach unten auf den traufseitig nach unten nächsten Wärmetauscher 10 fließt und dann zwischen Wärmetauscher 10 und Solarmodul 12 nach unten abfließt.

Jeder Wärmetauscher 10 weist einen oder mehrere Fluidkanäle 76 in Form einer Wasserleitung auf. Im gezeigten Ausführungsbeispiel weist jeder Wärmetauscher 10 zwei parallel zueinander und in Längsrichtung des Wärmetauschers 10 verlaufende Wasserleitungen beziehungsweise Fluidkanäle 76 auf. Die Fluidkanäle 76 sind einstückig mit dem übrigen Wärmetauscher 10 ausgebildet und werden über einen Rohrverbinder 78 miteinander verbunden, der in FIG 7 dargestellt ist.

FIG 7 zeigt einen Blick auf die Oberseite der montierten Wärmetauscher 10 und den Rohrverbinder 78. Der Rohrverbinder 78 weist für jeden Fluidkanal 76 einen Rohrstutzen 82 auf, der in den entsprechenden Fluidkanal 76 eingepresst wird. Mithilfe von Schrauben 84 wird der Rohrverbinder 78 mit mehreren Wärmetauschern 10 wasserdicht verbunden. Die Schauben 84 werden hierfür jeweils in einen Schraubkanal 86 der Wärmetauscher 10 eingeschraubt, so dass durch diese oder eine andere feste, formschlüssige Verbindung eine sich durch mehrere Fluidkanäle 76 erstreckende druckdichte Fluidleitung entsteht.

Der Rohrverbinder 78 kann eine solche Länge und Anzahl von Rohrstutzen 82 aufweisen, dass alle Fluidkanäle 76 von allen Wärmetauschern 10 einer Ebene, also von allen Wärmetauschern 10 unter einer nebeneinander liegenden Reihe von Solarmodulen 12, miteinander verbunden werden. Der Rohrverbinder 78 kann eine Zuleitung und Ableitung aufweisen, beispielsweise zu einer Wasserzu- oder -abführung beziehungsweise zum nächsten Rohrverbinder 78 einer überschuppenden oder unterschuppenden Lage von Wärmetauschern 10.

### Bezugszeichenliste

- 2: Gebäudedach
- 4: Dachsparren
- 6: Unterdeckplatte
- 8: Höhenjustierelement
- 10: Wärmetauscher
- 12: Solarmodul
- 14: Firstrichtung
- 16: Dachneigungsrichtung
- 18: Tragkopf
- 20: Tragschiene
- 22: Montageausnehmung
- 24: Breitbereich
- 26: Schmalbereich
- 28: Justieröffnung
- 30: Hals
- 32: Tragelement
- 34: Unterdeckbahn
- 36: Abdichtelement
- 38: Hybridsolarmodul-Dachmontagesystem
- 40: Halteausnehmung
- 42: Tragfuß
- 44: Geosenkrechte
- 46: Haltekralle
- 48: Eingriff
- 50: Anschlussdose
- 52: Abdeckung
- 54: Gewindekanal
- 56: Stütze
- 58: Einschubfach
- 60: Einschubfach
- 62: Halteelement
- 64: Regenrinne
- 66: Haltebügel
- 68: Verlängerungsblech
- 70: Auffangrinne
- 72: Auflagelinie
- 74: Abstand
- 76: Fluidkanal
- 78: Rohrverbinder
- 80: Öffnung
- 82: Rohrstutzen
- 84: Schraube
- 86: Schraubkanal

## Patentansprüche

1. Hybridsolarmodul-Dachmontagesystem (38) mit Höhenjustierelementen (8) zur Befestigung auf einem Gebäudedach (2), Tragschienen (20) zur Befestigung in Dachneigungsrichtung (16) des Gebäudedachs (2) auf den Höhenjustierelementen (8), sodass sie auf den Höhenjustierelementen (8) liegen, und Wärmetauscher (10) mit einem Fluidkanal (72) zur Befestigung in Firstrichtung (14) auf den Tragschienen (20) und mit einer planebenen Oberseite zur flächig anliegenden Anordnung von Solarmodulen (12) darauf,
**dadurch gekennzeichnet,**
**dass** die Tragschienen (20) mehrere Montageausnehmungen (22) aufweisen, durch die jeweils ein Höhenjustierelement (8) hindurchgeführt ist, und über jeder Montageausnehmung (22) ein Tragelement (32) angeordnet ist, mit dem die Tragschiene (20) auf dem Höhenjustierelement (8) aufliegt und hierdurch vom Höhenjustierelement (8) getragen ist.

2. Hybridsolarmodul-Dachmontagesystem (38) nach Anspruch 1, **dadurch gekennzeichnet,**
**dass** die Tragschienen (20) mehrere längliche Montageausnehmungen (22) mit jeweils einem Breitbereich (24) und einem Schmalbereich (26) aufweisen und die Höhenjustierelemente (8) einen Tragkopf (18) aufweisen, der durch den Breitbereich (24) hindurchpasst, nicht jedoch durch den Schmalbereich (26).

3. Hybridsolarmodul-Dachmontagesystem (38) nach Anspruch 1 oder 2,
**dadurch gekennzeichnet,**
**dass** das Tragelement (32) über der Montageausnehmung (22) eine Justieröffnung (28) zum Hindurchführen eines Werkzeugs aufweist, die kleiner als ein Tragkopf (18) des Höhenjustierelements (8) ist.

4. Hybridsolarmodul-Dachmontagesystem (38) nach einem der vorhergehenden Ansprüche,
**dadurch gekennzeichnet,**
**dass** die Tragschienen (20) oberhalb einer Montageausnehmung (22) ein Einschubfach (58, 60) zum Einschieben eines Flacheisens in Längsrichtung der Tragschiene (20) und zum kraftschlüssigen Halten des Flacheisens aufweist.

5. Hybridsolarmodul-Dachmontagesystem (38) nach einem der vorhergehenden Ansprüche,
**gekennzeichnet**
**durch** seine Anordnung auf einem Gebäudedach (2), wobei die Höhenjustierelemente (8) in eine Dachkonstruktion des Gebäudedachs (2) eingeschraubt sind und die Höhenjustierelemente (8) zwischen der Dachkonstruktion und der Tragschiene (20) jeweils von einem Abdichtelement (36) umgeben sind, das das Höhenjustierelement (8) nach außen hin abdichtet.

6. Hybridsolarmodul-Dachmontagesystem (38) nach einem der vorhergehenden Ansprüche,
**dadurch gekennzeichnet,**
**dass** die Wärmetauscher (10) in Firstrichtung (14) verschiebbar an den Tragschienen (20) befestigt sind.

7. Hybridsolarmodul-Dachmontagesystem (38) nach einem der vorhergehenden Ansprüche,
**dadurch gekennzeichnet,**
**dass** die Wärmetauscher (10) so an den Tragschienen (20) befestigt sind, dass sie einzeln um ihre Längsachse verkippbar sind.

8. Hybridsolarmodul-Dachmontagesystem (38) nach einem der vorhergehenden Ansprüche,
**dadurch gekennzeichnet,**
**dass** zwei benachbarte Wärmetauscher (10) in der Weise formschlüssig miteinander verbunden sind, dass sie trotz einer verkippbaren Befestigung in den Tragschienen (20) einen selbststabilisierenden Verbund bilden.

9. Hybridsolarmodul-Dachmontagesystem (38) nach einem der vorhergehenden Ansprüche,
**dadurch gekennzeichnet,**
**dass** die Wärmetauscher (10) zueinander in Längsrichtung beweglich sind.

10. Hybridsolarmodul-Dachmontagesystem (38) nach einem der vorhergehenden Ansprüche,
**dadurch gekennzeichnet,**
**dass** in der Verbindung zwischen benachbarten Wärmetauschern (10) ein Verkippspiel von zumindest 0,5 mm besteht, sodass durch das Verkippspiel eine Verkippbarkeit der Wärmetauscher (10) in den Tragschienen im Rahmen des Verkippspiels erhalten bleibt.

11. Verfahren zum Montieren eines Hybridsolarmodul-Dachmontagesystems (38) nach einem der vorhergehenden Ansprüche, bei dem auf einer Dachoberfläche Höhenjustierelemente (8) gesetzt werden und diese in der Höhe so zueinander justiert werden, dass sie in einer ebenen Fläche liegen, Tragschienen (20) an den Höhenjustierelementen (8) befestigt werden, darauf Wärmetauscher (10) mit einem Fluidkanal (72) montiert werden und auf die Oberseite der Wärmetauscher (10) Solarmodule (12) flächig aufgelegt werden.

12. Verfahren nach Anspruch 11,
**dadurch gekennzeichnet,**
**dass** die Höhenjustierelemente (8) jeweils einen oberen Tragkopf (18) aufweisen und Gruppen von jeweils mehreren in Firstrichtung (14) verlaufenden Reihen von Tragköpfen (18) so auf einem Gebäudedach (2) montiert sind, dass sie mehrere Ebenen aufspannen, die in Dachneigungsrichtung (16) überschuppend angeordnet sind.

13. Verfahren nach Anspruch 11 oder 12,
**dadurch gekennzeichnet,**
**dass** die Tragschienen (20) jeweils mehrere nach oben offene Halteausnehmungen (40) aufweisen und die Wärmetauscher (10) mit einem Tragfuß (42) von oben in mehrere Halteausnehmungen (40) benachbarter Tragschienen (20) eingefügt sind.

14. Verfahren nach Anspruch 13,
**dadurch gekennzeichnet,**
**dass** die Halteausnehmungen (40), zumindest in einer Anlagefläche für einen Tragfuß (42) eines Wärmetauschers (10), relativ zur Dachsenkrechten in Richtung zur Geosenkrechten (44) - und insbesondere über die Geosenkrechte (44) hinaus - verkippt sind.

## Claims

1. Hybrid solar module roof-mounting system (38) having height-adjustment elements (8) for fastening to a building roof (2), support rails (20) for fastening to the height-adjustment elements (8) in the roof-inclination direction (16) of the building roof (2) such that said support rails (20) bear on the height-adjustment elements (8), and heat exchangers (10) having a fluid duct (72) for fastening to the support rails (20) in the ridge direction (14), and having a planar upper side for the disposal of solar modules (12) so as to bear in a planar manner on said upper side,
**characterized in that**
the support rails (20) have a plurality of mounting recesses (22) through which one height-adjustment element (8) is in each case guided, and a support element (32) by way of which the support trail (20) bears on the height-adjustment element (8) and on account thereof is supported by the height-adjustment element (8) is disposed above each mounting recess (22).

2. Hybrid solar module roof-mounting system (38) according to Claim 1,
**characterized in that**
the support rails (20) have a plurality of elongate mounting recesses (22) having in each case one wide region (24) and one narrow region (26), and the height-adjustment elements (8) have a support head (18) which fits through the wide region (24) but not through the narrow region (26).

3. Hybrid solar module roof-mounting system (38) according to Claim 1 or 2,
**characterized in that**
the support element (32) above the mounting recess (22) has an adjustment opening (28) for guiding through a tool, said adjustment opening (28) being smaller than a support head (18) of the height-adjustment element (8).

4. Hybrid solar module roof-mounting system (38) according to one of the preceding claims, **characterized in that**
the support rails (20) above a mounting recess (22) have an insertion compartment (58, 60) for inserting a flat bar in the longitudinal direction of the support rail (20) and for holding the flat bar in a form-fitting manner.

5. Hybrid solar module roof-mounting system (38) according to one of the preceding claims, **characterized by**
the disposal of said hybrid solar roof-mounting system (38) on a building roof (2), wherein the height-adjustment elements (8) are screwed into a roof construction of the building roof (2) and the height-adjustment elements (8) between the roof construction and the support rail (20) are in each case surrounded by a sealing element (36) which seals the height-adjustment element (8) in relation to the outside.

6. Hybrid solar module roof-mounting system (38) according to one of the preceding claims, **characterized in that**
the heat exchangers (10) are fastened to the support rails (20) so as to be displaceable in the ridge direction (14).

7. Hybrid solar module roof-mounting system (38) according to one of the preceding claims, **characterized in that**
the heat exchangers (10) are fastened to the support rails (20) such that said heat exchangers (10) are capable of being individually tilted about the longitudinal axis of said heat exchangers (10).

8. Hybrid solar module roof-mounting system (38) according to one of the preceding claims, **characterized in that**
two neighbouring heat exchangers (10) are connected to one another in a form-fitting manner such that said heat exchangers (10), despite being fastened so as to be capable of tilting in the support rails (20), form a self-stabilizing composite.

9. Hybrid solar module roof-mounting system (38) according to one of the preceding claims, **characterized in that**
the heat exchangers (10) are movable relative to one another in the longitudinal direction.

10. Hybrid solar module roof-mounting system (38) according to one of the preceding claims, **characterized in that**
a tilting clearance of at least 0.5 mm is present in the connection between neighbouring heat exchangers (10) such that, by way of the tilting clearance, a tilting capability of the heat exchangers (10) in the context of the tilting clearance is maintained in the support rails.

11. Method for mounting a hybrid solar module roof-mounting system (38) according to one of the preceding claims, in which method height-adjustment elements (8) are placed on a roof surface and said height-adjustment elements (8) are mutually adjusted such that said height-adjustment elements (8) lie in a planar face; support rails (20) are fastened to the height-adjustment elements (8); heat exchangers (10) having a fluid duct (72) are mounted on said support rails (20); and solar modules (12) are placed in a planar manner on the upper side of the heat exchangers (10).

12. Method according to Claim 11,
**characterized in that**
the height-adjustment elements (8) have in each case one upper support head (18), and groups of in each case a plurality of rows of support heads (18) that run in the ridge direction are mounted on a building roof (2) such that said groups define a plurality of planes which are disposed so as to be imbricated in the roof-inclination direction (16).

13. Method according to Claim 11 or 12,
**characterized in that**
the support rails (20) have in each case a plurality of holding recesses (40) that are open towards the top, and the heat exchangers (10) by way of a support foot (42) are incorporated from above into a plurality of holding recesses (40) of neighbouring support rails (20).

14. Method according to Claim 13,
**characterized in that**
the holding recesses (40), at least in a bearing face for a support foot (42) of a heat exchanger (10), are tilted relative to the roof vertical in the direction of the geometric vertical (44) and in particular beyond the geometric vertical (44).

## Revendications

1. Système de montage (38) de module solaire hybride sur un toit, le système comprenant des éléments de réglage en hauteur (8) pour la fixation sur un toit de bâtiment (2), des rails de support (20) pour la fixation dans la direction de la pente (16) du toit de bâtiment (2) sur les éléments de réglage en hauteur (8), de telle sorte qu'ils reposent sur les éléments de réglage en hauteur (8), et des échangeurs thermiques (10) dotés d'un canal de fluide (72) pour la fixation dans la direction du faîte (14) sur les rails de support (20) et d'une face supérieure plane pour l'agencement en appui plan de modules solaires (12) sur celle-ci,
**caractérisé en ce que**
les rails de support (20) comprennent plusieurs évidements de montage (22) à travers lesquels un élément de réglage en hauteur (8) est respectivement guidé, et un élément de support (32) est disposé au-dessus de chaque évidement de montage (22), élément de support par lequel le rail de support (20) repose sur l'élément de réglage en hauteur (8) et est ainsi supporté par l'élément de réglage en hauteur (8).

2. Système de montage (38) de module solaire hybride sur un toit selon la revendication 1,
**caractérisé en ce que**
les rails de support (20) comprennent plusieurs évidements de montage alignés (22) dotés respectivement d'une région large (24) et d'une région étroite (26) et les éléments de réglage en hauteur (8) comprennent une tête de support (18) qui traverse la région large (24) mais pas la région étroite (26).

3. Système de montage (38) de module solaire hybride sur un toit selon la revendication 1 ou 2,
**caractérisé en ce que**
l'élément de support (32) comprend, au-dessus de l'évidement de montage (22), une ouverture de réglage (28) pour le passage d'un outil, laquelle ouverture de réglage est plus petite qu'une tête de support (18) de l'élément de réglage en hauteur (8).

4. Système de montage (38) de module solaire hybride sur un toit selon l'une des revendications précédentes, **caractérisé en ce que**
le rail de support (20) comprend, au-dessus d'un évidement de montage (22), un compartiment d'insertion (58, 60) pour l'insertion d'un acier plat dans la direction longitudinale du rail de support (20) et pour la retenue par force de l'acier plat.

5. Système de montage (38) de module solaire hybride sur un toit selon l'une des revendications précédentes, **caractérisé**
**par** son agencement sur un toit de bâtiment (2), les éléments de réglage en hauteur (8) étant vissés dans une structure du toit de bâtiment (2) et les éléments de réglage en hauteur (8) étant entourés respectivement par un élément d'étanchéité (36) entre la structure de toit et le rail de support (20), lequel élément d'étanchéité ferme de manière étanche l'élément de réglage en hauteur (8) vers l'extérieur.

6. Système de montage (38) de module solaire hybride sur un toit selon l'une des revendications précédentes, **caractérisé en ce que**
les échangeurs thermiques (10) sont fixés aux rails de support (20) dans la direction du faîte (14).

7. Système de montage (38) de module solaire hybride sur un toit selon l'une des revendications précédentes, **caractérisé en ce que**
les échangeurs thermiques (10) sont fixés aux rails de support (20) de manière à pouvoir être pivotés individuellement autour de leur axe longitudinal.

8. Système de montage (38) de module solaire hybride sur un toit selon l'une des revendications précédentes, **caractérisé en ce que**
deux échangeurs thermiques adjacents (10) sont reliés l'un à l'autre par complémentarité de forme de telle sorte qu'ils forment un ensemble autostabilisant malgré une fixation pivotante dans les rails de support (20).

9. Système de montage (38) de module solaire hybride sur un toit selon l'une des revendications précédentes, **caractérisé en ce que**
les échangeurs thermiques (10) sont mobiles les uns par rapport aux autres dans la direction longitudinale.

10. Système de montage (38) de module solaire hybride sur un toit selon l'une des revendications précédentes, **caractérisé en ce que**
dans la liaison entre des échangeurs thermiques adjacents (10) il existe un jeu de pivotement d'au moins 0,5 mm, de telle sorte que, grâce au jeu de pivotement, une possibilité de pivotement des échangeurs thermiques (10) dans les rails de support soit maintenue dans les limites du jeu de pivotement.

11. Procédé de montage d'un système de montage (38) de module solaire hybride sur un toit selon l'une des revendications précédentes, dans lequel des éléments de réglage en hauteur (8) sont placés sur une surface de toit et ceux-ci sont réglés en hauteur les uns par rapport aux autres de telle sorte qu'ils soient situés dans une surface plane, des rails de support (20) sont fixés aux éléments de réglage en hauteur (8), ensuite des échangeurs thermiques (10) dotés d'un canal de fluide (72) sont montés et des modules solaires (12) sont placés à plat sur la face supérieure des échangeurs thermiques (10) .

12. Procédé selon la revendication 11,
**caractérisé en ce que**
les éléments de réglage en hauteur (8) comprennent respectivement une tête de support (18) et des groupes de respectivement plusieurs rangées de têtes de support (18) s'étendant dans la direction du faîte (14) sont montés sur un toit de bâtiment (2) de telle sorte qu'ils définissent plusieurs plans qui sont disposés en chevauchement dans la direction de la pente (16) du toit.

13. Procédé selon la revendication 11 ou 12, **caractérisé en ce que**
les rails de support (20) comprennent respectivement plusieurs évidements de retenue (40) ouverts vers le haut et les échangeurs thermiques (10) sont introduits par un pied de support (42) par le haut dans plusieurs évidements de retenue (40) de rails de support adjacents (20) .

14. Procédé selon la revendication 13,
**caractérisé en ce que**
les évidements de retenue (40) sont pivotés, au moins dans une surface d'appui pour un pied de support (42) d'un échangeur thermique (10), par rapport à la normale au toit en direction de la verticale (44), et en particulier au-delà de la verticale (44).
